# EUROPÄISCHE PATENTSCHRIFT

(11) **EP 2 327 646 B1**
(45) Veröffentlichungstag und Bekanntmachung des Hinweises auf die Patenterteilung: **08.02.2012**
(21) Anmeldenummer: 09177226.9
(22) Anmeldetag: 26.11.2009
(51) Int. Cl.: B65G 47/84, G01N 35/04

(54) **In einem Abzweig einer Transportbahn für Laborproben in einem analytischen Labor angeordnete Weiche**
Switch in a branch of a transport path for laboratory samples in an analytical laboratory
Aiguillage agencé dans un détournement d'une bande de transport pour échantillons de laboratoire dans un laboratoire d'analyse

(43) Veröffentlichungstag der Anmeldung: 01.06.2011
(73) Patentinhaber: GLP systems GmbH, 21079 Hamburg (DE)
(72) Erfinder: von Froreich, André, Dr., 21149 Hamburg (DE)
(74) Vertreter: von Eichel-Streiber, Caspar

(56) Entgegenhaltungen:
- EP-A1- 0 775 650
- US-A- 5 730 276
- US-A1- 2005 207 937

## Beschreibung

Zur Bewältigung des Materialflusses in größeren analytischen Laboratorien haben seit einigen Jahren Fördersysteme Einzug gehalten. Diese Systeme sind in der Lage, große Mengen an Untersuchungsmaterial individuell in unterschiedlicher Reihenfolge an verschiedenste Ziele zu lenken. Hierzu werden im Fördersystem Weichen benötigt, die einzelne Proben aus dem Materialstrom heraus sortieren und in Abzweige bzw. auf andere Förderbahnen steuern.

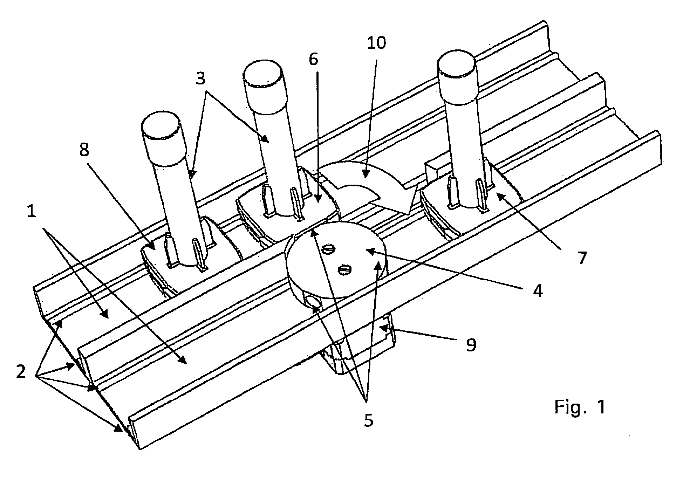

Entsprechend dem Stand der Technik werden dazu Schiebeweichen verwendet, die einen Materialträger seitlich von einer Förderbahn auf eine andere verschieben. Dies ist z.B. in der DE 44 34 714 A1 gezeigt (vgl. dort Fig. 1, Bezugsziffer 28).

Eine andere Lösung ist in der DE 43 29 078 A1 beschrieben. Dort ist eine Scheibe vorgesehen, die an ihrem äußeren Umfang Ausnehmungen aufweist, in die runde Materialträger hineinfahren. Die Scheibe befördert anschließend den Materialträger durch Drehen über eine bestimmte Förderbahn, die den Materialträger weitertransportiert (Offenlegungsschrift DE 43 29 078 A1).

Die Schiebeweiche hat den Nachteil, dass der Schieber bei der Aussonderung eines Materialträgers die Förderbahn für nachfolgende Materialträger blockiert und Zeit benötigt, um sich wieder zurückzuziehen. Außerdem erfährt das Material eine Bremsbeschleunigung in Fahrtrichtung, eine seitliche Beschleunigung und Bremsung und anschließend eine Beschleunigung in der neuen Fahrtrichtung. Die Lösung durch eine Scheibe ist Raum fordernd, da die Scheibe über mehrere Förderbahnen hinweg reichen muss. Nicht auszusteuernde Materialträger können nicht ungehindert durch sie hindurch fahren, sondern müssen immer aktiv umgesetzt werden. Dadurch ist die Verarbeitung der Materialträger in der Weiche zeitaufwendig, und es wird jeder Materialträger gestoppt, erfährt eine Drehbeschleunigung und anschließend eine Beschleunigung in der neuen Fahrtrichtung.

Eine weitere, dem Oberbegriff des Anspruchs 1 entsprechende Konstruktionsmöglichkeit ist in der US 2005/0207937 A1 offenbart. Dort ist eine Weiche für das Sortieren von in Probenhaltern angeordneten Laborproben gezeigt, die zum Überführen einer Probe ein rotierendes Rad mit umfangsseitig angeordneten Magneten aufweist, welche in der Höhe so positioniert sind, dass sie an einem seitlich an dem Probenhalter angeordneten magnetischen Abschnitt angreifen können, um den Probenhalter dann mitzunehmen und auf eine Abzweigbahn zu überführen. Um den Überführungsprozess auszulösen, fahren bei dieser Konstruktion Umlenkarme in die Transportbahn, die die dort laufenden Probenhalter aus dem Geradeauslauf, in dem sie das mit Magneten bestückte Rad unbeeinflusst passieren würden, auslenken und gegen die Umfangsfläche des Magnetrades drücken, wo der Probenhalter dann erfasst und anschließend durch eine Unterbrechung in der seitlichen Führungswand überführt wird. Diese Lösung benötigt die zusätzlichen Elemente der Umlenkarme, die entsprechenden Montageraum benötigen, die Fördergeschwindigkeit in der Transportbahn beschränken und eine zusätzliche Störanfälligkeit bedingen.

Der Erfindung liegt die Aufgabe zugrunde, einen Materialstrom aus auf Probenhaltern angeordneten Laborproben in einem Weichenbereich möglichst zügig aufzuteilen. Darüber hinaus ist es das Ziel, eine Weichenmechanik zu schaffen, die möglichst wenig Raum beansprucht, um die Flexibilität des Fördersystems zu erhöhen und den Platzbedarf zu verringern.

Dabei sollen bevorzugt auch unnötige Beschleunigungen der Laborproben vermieden werden, die zu einer unerwünschten Vermischung des Probeninhaltes, beispielsweise bei zentrifugierten Blutproben, führen können. Auszusteuernde Laborproben sollen bevorzugt ebenso mit minimal möglichen Beschleunigungen aus dem Probenstrom herausgegriffen und auf eine andere Förderstrecke gesteuert werden.

Die Aufgabe wird erfindungsgemäß gelöst durch eine Transportbahn mit den Merkmalen des Anspruchs 1. Vorteilhafte Weiterbildungen dieser Transportbahn, die insbesondere die oben als bevorzugt zu lösenden Aufgabenaspekte und auch andere Aufgaben lösen, sind in den abhängigen Ansprüchen 2 bis 9 angegeben.

Gemäß der Erfindung ist dem Abzweig als Steuerelement der Weiche ein an seinem Umfang wenigstens einen Magneten tragendes, zur Rotation antreibbares Stellrad angeordnet. Dabei erfolgt diese Anordnung solchermaßen, dass bei einer Rotation des Stellrades der Magnet einen magnetischen Abschnitt des Probenhalters erfasst und der Probenhalter so in den Abzweig überführt wird. Der Halteabschnitt des Probenhalters kann entweder selbst ein Magnet sein, ist jedoch bevorzugt aus einem ferromagnetischen Material (z.B. einem Eisenblech). Dabei ist entweder die Kraft des Magneten auf den Halteabschnitt so bemessen, dass ein gefahrloses Abstreifen des Halteabschnittes von dem Magneten nach vollendeter Überführung in den Abzweig erfolgen kann, oder der Magnet an dem Stellrad ist selbst abschaltbar gestaltet, insbesondere in Form eines Elektromagneten (vgl. Anspruch 2). Das Stellrad ist dabei neben der Transportbahn angeordnet und bildet mit einem Umfangsabschnitt in einem Bereich, in dem die seitliche Führungswand der Transportbahn fortgelassen ist, eine Verlängerung dieses Führungsabschnittes. Dort wird der Magnet aktiviert bzw. gezielt positioniert, um den Halteabschnitt des Probenhalters zu erfassen, wenn dieser in den Abzweig überführt werden soll. Soll der Probenhalter auf dem Abzweig der Transportbahn weiter transportiert und nicht in den Abzweig überführt werden, so kann das Stellrad in einem entsprechenden Winkel positioniert werden, in dem kein Magnet in Richtung des alten Abschnittes eines vorbeifahrenden Probenhalters weist. In dieser Stellung beeinflusst das Stellrad die Fahrtrichtung des Probenhalters nicht, dient vielmehr als Verlängerung der seitlichen Führung.

Dies erlaubt eine besonders kompakte Bauweise der Weiche. Denn das Stellrad kann entsprechend klein dimensioniert werden.

Die Weiche ist außerhalb des eigentlichen Bewegungspfades des Probenhalters angeordnet, so dass er den Weitertransport nachfolgender Probenhalter nicht behindert, mithin eine zügige "Beschaltung" der Weiche erlaubt, ohne wie im Stand der Technik als "Nadelöhr" für nachfolgende Probenhalter zu wirken.

Insbesondere ist die Weiche so ausgebildet, dass das Stellrad über einen eigenen Antrieb aktiv angetrieben wird, um eine "Aktivweiche" auszubilden, mit der durch den aktiven Antrieb der Probenhalter in den Abzweig gefahren wird.

Mit Vorteil weist die Weiche eine Steuerung auf, mittels derer das Stellrad aktiviert und angetrieben werden kann. Diese Steuerung kann mit einem Sensor zur Positionserkennung eines in den Bereich der Weiche einfahrenden Probenhalters verbunden sein, wie er gemäß Anspruch 4 vorgesehen sein kann. Ein Sensor zur Positionserkennung erlaubt durch ein frühzeitiges und genaues Erkennen der Position eines heranfahrenden Probenhalters eine exakte Abstimmung der Weiche und Positionierung des Stellrades zum optimalen Erfassen des Halteabschnittes des Probenhalters (vgl. Anspruch 6). Der Sensor zur Positionserkennung kann beispielsweise eine Lichtschranke, einen Nährungsinitiator, oder einen Hallsensor enthalten, aber auch mit allen anderen denkbaren Sensorelementen zur Positionserfassung ausgestattet sein.

Für die geforderte weitgehende Automatisierung des Transportsystems bzw. der Transportbahn ist es von Vorteil, wenn im Bereich der Weiche eine Auswerteeinrichtung vorgesehen ist, die mit der Steuerung verbunden und zur Erkennung von auf den Probenhaltern angebrachten, diese individualisierenden Kennungen eingerichtet ist. So kann bei einer Näherung eines Probenhalters an die Weiche der Probenhalter erkannt und es kann entschieden werden, ob die auf diesem angeordnete Laborprobe in den Abzweig zu überführen ist oder aber den weiteren Weg entlang der Hauptrichtung der Transportbahn geführt werden soll.

Für die gemäß einem Unteraspekt der Aufgabe der Erfindung anzustrebende, schonende Behandlung der Proben im Bereich der Weiche, ist es von Vorteil, wenn der Antrieb des Stellrades so eingerichtet ist, dass beim Erfassen eines Probenhalters durch den Magneten die Rotationsgeschwindigkeit des Stellrades einer Fließgeschwindigkeit in der Transportbahn entspricht, genauer eine Bahngeschwindigkeit des rotierenden Magnet der Fließgeschwindigkeit entspricht. Durch diese Maßnahme werden bei den Weichensystemen gemäß dem Stand der Technik auftretende Querbeschleunigungen bzw. das abrupte Bremsen und Beschleunigen der Proben verhindert. Eine weitere Verbesserung der schonenden Behandlung der Proben ergibt sich, wenn der Antrieb des Stellrades wie in Anspruch 9 angegeben eingerichtet ist. Demgemäß wird das Stellrad der Weiche in seiner Rotationsgeschwindigkeit entsprechend gleichmäßig verringert, um eine abrupte Abbremsung beim Abstreifen des Halteabschnittes von dem Magneten so verhindert und auch hier einen möglichst gleitenden Übergang der Bewegungen zu schaffen.

Weitere Vorteile und Merkmale ergeben sich aus der nachfolgenden Beschreibung eines Ausführungsbeispiels anhand der beigefügten Figur. Es zeigt:
- Fig. 1: einen Ausschnitt eines Transport- bzw. Fördersystems für Laborproben mit einer erfindungsgemäßen Weiche in dreidimensionaler Ansicht von oben.

In Fig. 1, die eine schematische und keinesfalls maßstabsgerechte Darstellung eines Ausführungsbeispiels einer erfindungsgemäßen Transportbahn zeigt, sind zwei nebeneinander angeordnete Förderstrecken mit 1 bezeichnet. Die in der Figur in Transportrichtung links bzw. in der Darstellung oberhalb angeordnete Förderstrecke 1 ist dabei die Haupttransportrichtung, die in Transportrichtung rechts dargestellte, in der Figur untere Strecke 1 stellt einen Abzweig dar.

In den Förderstrecken 1 laufen seitlich an Seitenwänden angeordnete Förderriemen 2 um, die angetrieben sind und auf denen Probenhalter 6, 7, 8 aufsitzen und transportiert werden, in denen wiederum Probengefäße 3 mit Laborproben gehalten sind. Beispiele für solche Laborproben können sein Urinproben, Blutproben, aber auch feste Proben oder in Flüssigkeit aufgelöste Proben zur labortechnischen Analyse. Die Probenhalter 6, 7, 8 haben einen im Wesentlichen quadratischen Grundkörper mit abgerundeten Ecken. An allen vier seitlichen Längsseiten der Probenhalter sind mittig Eisenbleche angeordnet, die einen magnetischen Halteabschnitt bilden.

In der Weiche befindet sich ferner ein Stellkörper in Form eines Stellrades 4, das entlang seines Umfanges gleichwinklig verteilt (in einem Winkelabstand von 120°) insgesamt drei Magnete 5 aufweist. Das Stellrad 4 ist um eine mittelsenkrechte Achse rotierbar angeordnet, wobei ein motorischer Antrieb 9 zum direkten Antreiben des Rades 4 vorgesehen ist.

In der in Fig. 1 gezeigten Situation befindet sich ein Probenhalter 6 im Bereich der Weiche, wobei das Stellrad 4 in eine Winkelposition gedreht worden ist, in welcher einer der Magneten 5 an einem diesem gegenüberliegenden Halteabschnitt des Probenhalters 6 angreift. Der Antrieb 9 bewegt nun das Stellrad 4 synchronisiert mit einer Umfangsgeschwindigkeit, die der Geschwindigkeit der Förderriemen 2 entspricht und zieht so den Probenhalter 6 mitsamt dem darauf angeordneten Probengefäß 3 entlang der Richtung des Pfeils 10 durch die Öffnung in der seitlichen Führung in den Abzweig, also die in Förderrichtung rechts gelegene, in der Figur unten dargestellte Förderstrecke 1. In dieser Förderstrecke befindet sich bereits ein zuvor aussortierter Probenhalter 7. In dem Abzweig laufen die Förderriemen 2 in der neuen Förderrichtung und besorgen so den Abtransport des Probenhalters 7 sowie des Probenhalters 6, nach dem dieser in den Abzweig überführt worden ist.

Durch weitere Rotation des Stellrades 4, wenn der Probenhalter 6 gegen die untere Seitenwand des Abzweiges stößt, wird der Magnet 5 von dem Halteabschnitt an dem Probenhalter 6 gelöst, so dass der Übergang in die Abtransportbewegung gesteuert durch die umlaufenden Förderriemen 2 in dem Abzweig erfolgen kann. Während des Überführens des Probenhalters 6 in den Abzweig wird die Rotationsgeschwindigkeit des Stellrades 4 verringert, um Querbeschleunigungen bei der Überführung des Probenhalters 6 zum Abtransport in den Abzweig zu minimieren. Im Anschluss wird das Stellrad 4 erneut positioniert, um einen nachfolgenden weiteren Probenhalter 8 in den Abzweig zu überführen (Magnet 5 in Richtung des Halteabschnittes des vorbeifahrenden Probenhalters ausgerichtet) oder um den nachfolgenden Probenhalter 8 in der Haupttransportrichtung weiterfahren zu lassen (Position des Stellrades 4 so, dass kein Magnet in Richtung des Halteabschnittes des Probenhalters 8 weist.

Nicht näher gezeigt ist eine in der Weiche angeordnete Sensoreinheit, die stromauf der Weiche im Bereich des Probenhalters 8 gelegen ist und einmal einer Positionserkennung eines sich nähernden Probenhalters 8, zum anderen einer Auswertung zur Erkennung der individualisierenden Kennung des Probenhalters 8 dient. Diese Einheit ist mit einer ebenfalls nicht gezeigten Steuerung verbunden, die wiederum den motorischen Antrieb 9 des Stellrades 4 ansteuert, um dieses Stellrad 4 entsprechend zu positionieren und in seinem Lauf mit der Antriebsgeschwindigkeit der Förderriemen 2 in der in der Figur oben dargestellten Förderstrecke 1 zu synchronisieren, um so ein sicheres Erfassen und Überführen eines Probenhalters in den Abzweig zu gewährleisten.

Die individualisierte Erkennung des Probenhalters kann in bekannter Weise z.B. mit Barcodes, durch Datamatrixcodes oder mittels Radiofrequenz-Identifikation (RF-ID) erfolgen. Die Steuerung kann insbesondere in Form eines Mikrocomputers gebildet sein.

Das hier gezeigte Ausführungsbeispiel ist nicht beschränkend, sondern dient lediglich der Erläuterung der Erfindung, die in den nachfolgenden Ansprüchen in ihrer Allgemeinheit bestimmt ist.

### Bezugszeichenliste

- 1: Förderstrecke
- 2: Förderriemen
- 3: Probengefäß
- 4: Stellrad
- 5: Magnet
- 6: Probenhalter
- 7: Probenhalter
- 8: Probenhalter
- 9: motorischer Antrieb
- 10: Pfeil

## Patentansprüche

1. Eine Transportbahn (1) für Laborproben in einem analytischen Labor mit einem Abzweig und mit einer im Abzweig angeordneten Weiche zur Steuerung eines Materialflusses der auf in einem Halteabschnitt mit einem magnetischen Material versehenen Probenhaltern (6, 7, 8) in der Transportbahn (1) geführten Laborproben, wobei in dem Abzweig ein zur Rotation antreibbarer Stellkörper in Form eines Stellrades (4) mit wenigstens einem an seinem Umfang angeordneten Magneten (5) derart angeordnet ist, dass bei einer Rotation des Stellrades (4) der Magnet (5) den Halteabschnitt des Probenhalters (6, 7, 8) erfasst und der Probenhalter (6, 7, 8) so in den Abzweig überführt wird, wobei das Stellrad (4) in einem Abschnitt, in welchem für eine Überführung des Probenhalters (6, 7, 8) in den Abzweig eine seitliche Führungswand der Transportbahn (1) unterbrochen ist, so angeordnet ist, dass es bei einer Rotation den seitlich an dem Probenhalter (6, 7, 8) angeordneten Halteabschnitt erfasst und der Probenhalter (6, 7, 8) so in den Abzweig überführt wird, **dadurch gekennzeichnet, dass** das Stellrad (4) mit einem Umfangsabschnitt in einem Bereich, in dem die seitliche Führungswand der Transportbahn unterbrochen ist, eine Verlängerung eines Führungsabschnittes der Führungswand bildet.

2. Transportbahn nach Anspruch 1, **dadurch gekennzeichnet, dass** der Magnet (5) des Stellrades (4) als Elektromagnet ausgebildet ist.

3. Transportbahn nach einem der vorhergehenden Ansprüche, **gekennzeichnet durch** eine Steuerung zum gezielten Aktivieren der Weiche und Antreiben des Stellrades (4).

4. Transportbahn nach Anspruch 3, **dadurch gekennzeichnet, dass** sie einen mit der Steuerung verbundenen Sensor zur Positionserkennung eines in den Bereich der Weiche einfahrenden Probenhaltes (6, 7, 8) enthält.

5. Transportbahn nach Anspruch 4, **dadurch gekennzeichnet, dass** der Sensor zur Positionserkennung eine Lichtschranke, wenigstens einen Näherungsinitiator oder wenigstens einen Hallsensor enthält.

6. Transportbahn nach einem der Ansprüche 4 oder 5, **dadurch gekennzeichnet, dass** die Steuerung eingerichtet ist, bei Erkennen der Position eines in den Bereich der Weiche einfahrenden Probenhalters (6, 7, 8) das Stellrad (4) zum optimalen Erfassen des Halteabschnittes des Probenhalters (6, 7, 8) mit dem Magneten (5) vorauszurichten.

7. Transportbahn nach einem der Ansprüche 3 bis 6, **dadurch gekennzeichnet, dass** sie eine mit der Steuerung verbundene Auswerteeinrichtung aufweist zum Auswerten einer auf dem Probenhalter (6, 7, 8) angebrachten, diesen individualisierenden Kennung und dass die Steuerung eingerichtet ist, die Weiche nur bei als für die Überführung in den Abzweig vorgesehen erkannten Probenhaltern (6, 7, 8) zu aktivieren.

8. Transportbahn nach einem der vorhergehenden Ansprüche, **dadurch gekennzeichnet, dass** das Stellrad (4) in seinem Antrieb so eingerichtet ist, dass beim Erfassen eines Probenhalters (6, 7, 8) durch den Magneten (5) die Rotationsgeschwindigkeit des Stellrades (4) einer Fließgeschwindigkeit in der Transportbahn (1) entspricht.

9. Transportbahn nach einem der vorhergehenden Ansprüche, **dadurch gekennzeichnet, dass** das Stellrad (4) in seinem Antrieb so eingerichtet ist, dass beim Einschwenken eines Probenhalters (6, 7, 8) in den Abzweig die Rotationsgeschwindigkeit des Stellrades (4) vor einem Abstreifen des Halteabschnittes von dem Magneten (5) derart gleichmäßig vermindert wird, dass Beschleunigungseffekte an dem Probenhalter (6, 7, 8) minimiert werden.

## Claims

1. A transport track (1) for laboratory samples in an analytical laboratory fitted with a branch and with a junction arranged in the branch for controlling a material flow of the laboratory samples guided on sample holders (6, 7, 8) provided in a retaining portion with a magnetic material in the transport track (1) whereas an adjusting body in the form of an adjusting wheel is arranged in the branch with at least one magnet (5) arranged on its circumference in such a way that during rotation of the adjusting wheel (4) the magnet (5) detects the retaining portion of the sample holder (6, 7, 8) and the sample holder (6, 7, 8) is thus transferred into the branch, whereas the adjusting wheel (4) is arranged in a section, in which a lateral guiding wall of the transport track (1) is interrupted for transferring the sample holder (6, 7, 8) into the branch, in such a way that it detects the retaining portion arranged laterally on the sample holder (6, 7, 8) during rotation and that the sample holder (6, 7, 8) is thus transferred into the branch, **characterised in that** the adjusting wheel (4) forms an extension of a guiding section with a circumferential section in a region in which the lateral guiding wall of the transport track is interrupted.

2. A transport track according to claim 1, **characterised in that** the magnet (5) of the adjusting wheel (4) is designed as an electromagnet.

3. A transport track according to any of the preceding claims, **characterised by** a control unit for targeted activation of the junction and drive of the adjusting wheel (4).

4. A transport track according to claim 3, **characterised in that** it contains a sensor connected to the control unit for recognising the position of a sample holder (6, 7, 8) entering the region of the junction.

5. A transport track according to claim 4, **characterised in that** the sensor for recognising the position contains a photoelectric barrier, at least one proximity switch or at least one Hall sensor.

6. A transport track according to one of claims 4 or 5, **characterised in that** the control device is designed, to pre-align the adjusting wheel (4) for optimal detection of the retaining portion of the sample holder (6, 7, 8) with the magnet (5) when recognising the position of a sample holder (6, 7, 8) entering the region of the junction.

7. A transport track according to one of claims 3 to 6, **characterised in that** it has an interpretation device connected to the control unit for interpreting a designation placed on the sample holder (6, 7, 8) and identifying the same that the control device is designed, for activating the junction only for recognised sample holders (6, 7, 8) arranged for transfer into the branch.

8. A transport track according to any of the preceding claims, **characterised in that that** the adjusting wheel (4) is designed in its drive unit in such a way that when a sample holder (6, 7, 8) is detected by the magnet (5) the rotational velocity of the adjusting wheel (4) corresponds to a flow velocity in the transport track (1).

9. A transport track according to any of the preceding claims, **characterised in that that** the adjusting wheel (4) is designed in its drive unit in such a way that when a sample holder (6, 7, 8) is pivoted inward into the branch, the rotational velocity of the adjusting wheel (4) is reduced uniformly before the retaining portion is sensed by the magnet (5), in such a way that acceleration effects are minimised on the sample holder (6, 7, 8).

## Revendications

1. Ligne de transport (1) pour échantillons de laboratoire dans un laboratoire d'analyses disposant d'un embranchement et d'un aiguillage disposé dans l'embranchement permettant de commander un flux de matériaux des échantillons de laboratoire guidés dans la ligne de transport (1) sur des porte-échantillons (6, 7, 8) pourvus d'un matériau magnétique dans une section de retenue, dans laquelle un corps de réglage pouvant être mis en rotation, sous forme de roue de réglage (4) comportant au moins un aimant (5) disposé sur son périmètre, dans l'embranchement, est prévu de telle sorte que lors de la rotation de la roue de réglage (4), l'aimant (5) détecte la section de retenue du porte-échantillons (6, 7, 8) et que le porte-échantillons (6, 7, 8) est ainsi transféré dans l'embranchement, dans laquelle la roue de réglage (4) est disposée dans une section, dans laquelle une paroi de guidage latérale de la ligne de transport (1) est interrompue pour assurer le transfert du porte-échantillons (6, 7, 8) dans l'embranchement, de telle sorte que ladite roue, lors de la rotation, détecte la section de retenue disposée latéralement sur le porte-échantillons (6, 7, 8) et que le porte-échantillons (6, 7, 8) est ainsi transféré dans l'embranchement, **caractérisée en ce que** la roue de réglage (4) constitue un prolongement de section de guidage avec une section périphérique dans une zone dans laquelle la paroi de guidage latérale de la ligne de transport est interrompue.

2. Ligne de transport selon la revendication 1, **caractérisée en ce que** l'aimant (5) de la roue de réglage (4) est conçu comme électroaimant.

3. Ligne de transport selon l'une quelconque des revendications précédentes, **caractérisée par** une commande permettant l'activation ciblée de l'aiguillage et l'entraînement de la roue de réglage (4).

4. Ligne de transport selon la revendication 3, **caractérisée en ce qu'**elle comporte un capteur relié à la commande permettant de reconnaître la position d'un porte-échantillons (6, 7, 8) pénétrant dans la zone de l'aiguillage.

5. Ligne de transport selon la revendication 4, **caractérisée en ce que** le capteur permettant de reconnaître la position contient une cellule photoélectrique, au moins un interrupteur de proximité ou au moins un capteur de Hall.

6. Ligne de transport selon l'une quelconque des revendications 4 ou 5, **caractérisée en ce que** la commande est conçue, pour préaligner la roue de réglage (4) pour garantir une détection optimale de la section de retenue du porte-échantillons (6, 7, 8) avec l'aimant (5), lors de la détection de la position d'un porte-échantillons (6, 7, 8) pénétrant dans la zone de l'aiguillage.

7. Ligne de transport selon l'une quelconque des revendications 3 à 6, **caractérisée en ce qu'**elle présente un dispositif d'interprétation relié au système de commande pour interpréter une désignation placée sur le porte-échantillons (6, 7, 8) et identifiant celui-ci et que la commande est conçue pour activer l'aiguillage seulement pour les porte-échantillons (6, 7, 8) reconnus et prévus pour le transfert dans l'embranchement.

8. Ligne de transport selon l'une quelconque des revendications précédentes, **caractérisée en ce que** la roue de réglage (4) est installée dans son système d'entraînement de telle sorte que la vitesse de rotation de la roue de réglage (4) correspond à une vitesse d'écoulement dans la ligne de transport (1) lors de la détection d'un porte-échantillons (6, 7, 8) par l'aimant (5).

9. Ligne de transport selon l'une quelconque des revendications précédentes, **caractérisée en ce que** la roue de réglage (4) est installée dans son système d'entraînement de telle sorte que la vitesse de rotation de la roue de réglage baisse de façon uniforme lors de la rentrée par pivotement d'un porte-échantillons (6, 7, 8) dans l'embranchement, avant que la section de retenue ne soit effleurée par l'aimant (5), de telle sorte que les effets d'accélération sont minimisés au niveau du porte-échantillons (6, 7, 8).
